# EUROPEAN PATENT APPLICATION

(11) **EP 4 191 549 A1**
(43) Date of publication of application: **07.06.2023**
(21) Application number: 21848973.0
(22) Date of filing: 16.07.2021
(51) Int. Cl.: G07G 1/00, G06K 7/10

(54) **WIRELESS TAG READING DEVICE**

(30) Priority: 28.07.2020 JP 2020127378
(71) Applicant: Toshiba TEC Kabushiki Kaisha, Tokyo 141-8562 (JP)
(72) Inventor: SUZUKI, Yuki, Tokyo 141-8562 (JP)
(74) Representative: Hoffmann Eitle
(86) International application number: PCT/JP2021/026786
(87) International publication number: WO 2022/024811

(57) **Abstract**

A wireless tag reading device (1) of an embodiment that is for reading tag information of a wireless tag attached to an article housed in a housing portion (15), including: a bottom surface portion (12); and a plurality of side surface portions (13,14) erected upward from an end of the bottom surface portion (12), the housing portion (15) being surrounded by the bottom surface portion (12) and the side surface portions (13A, 13B), in which the wireless tag reading device (1) includes: inside the side surface portions (13A, 13B), an antenna (212, 213) that radiates a radio wave into the housing portion (15); a radio wave reflecting unit (222, 223) that is provided outside the antenna (212, 213) and that reflects the radio wave radiated from the antenna (212, 213) toward the housing portion (15); and a radio wave absorbing unit (231, 232) that is provided at an upper portion of the radio wave reflecting unit (222, 223) and that absorbs the radio wave radiated from the antenna (212, 213).

## Description

### FIELD

An embodiment of the present invention relates to a wireless tag reading device.

### BACKGROUND

These days, a wireless tag reading device is used in a store such as a supermarket or a mass retailer. A wireless tag is attached to an article such as a product to be sold by the store. The wireless tag reading device reads information related to the article to be purchased from the wireless tag. Articles are put into, for example, a basket, and brought to a checkout counter. The wireless tag reading device provided in the checkout counter performs settlement processing related to the articles to be purchased by collectively reading the articles put in the basket by an installed antenna.

By the way, the wireless tag reading device has a box type shape in which an upper portion, a front portion, or both the portions are opened and a hollow housing portion is provided inside. A customer or a store clerk houses a product or a basket containing the product in the box through the opening. The wireless tag reading device radiates a radio wave from an antenna provided at the bottom or side of the box to a housing portion in the box, and reads information of an endless tag attached to a product in the housing portion.

By the way, many wireless tag reading device include a radio wave reflecting unit for preventing leakage of a radio wave radiated from the antenna to the outside. The radio wave reflecting unit reflects the radio wave leaking to the outside toward the side of an accommodating portion. In the accommodating portion, a radio wave radiated from the antenna and a radio wave reflected by the radio wave reflecting unit are mixed. In such a state, there may occur a null point at which radio waves are weakened by interference between the radio waves. A radio wave from an antenna is difficult to reach a wireless tag located at a position where the null point occurs, which makes it difficult to read tag information of the wireless tag.

### SUMMARY OF THE INVENTION

### Problem to be Solved by the Invention

Problems to be solved by the invention are to provide a wireless tag reading device capable of improving accuracy of reading tag information of a wireless tag.

### Means for Solving Problem

A wireless tag reading device of an embodiment includes: a bottom surface and a plurality of side surfaces erected upward from the ends of the bottom surface, wherein the radio tag reader reads the tag information of the radio tag attached to an article housed in a housing surrounded by the bottom surface and the side surfaces, and is provided with an antenna which radiates radio waves to the radio tag, a radio wave reflecting section which is provided outside the antenna and reflects the radio waves radiated from the antenna toward the housing section, and a radio wave absorbing section which is provided above the radio wave reflecting section and absorbs the radio waves radiated from the antenna.

### BRIEF DESCRIPTION OF DRAWINGS

FIG. 1 is a perspective view illustrating a wireless tag reading device according to an embodiment.
FIG. 2 is an explanatory cross-sectional view of the wireless tag reading device taken along A-A position.
FIG. 3 is a block diagram illustrating a hardware configuration of the wireless tag reading device.

### DETAILED DESCRIPTION

An embodiment will be described below with reference to the drawings. Note that, in the embodiment, a product sold in a store will be described as one example of an article. Furthermore, the embodiment does not limit the invention.

A wireless tag reading device 1 is connected to, for example, a self point of sales (POS) terminal with which a customer himself/herself performs operations related to registration and checkout of a product (e.g., an clothing item, a food items) to be purchased, and the wireless tag reading device 1 reads product information (e.g., product name and product price) that is wirelessly sent from a wireless tag attached to the product to be purchased. The wireless tag reading device 1 transmits the read product information to the self-POS terminal. The self-POS terminal executes settlement processing related to the product to be purchased by the customer based on the product information received from the wireless tag reading device 1.

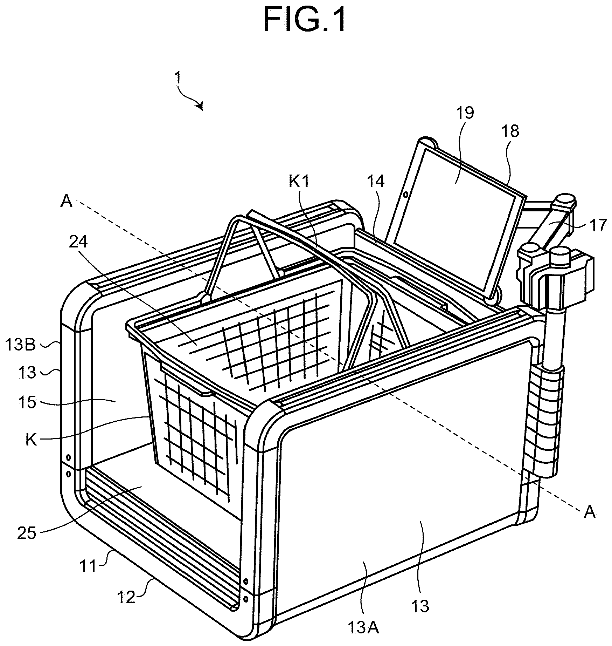

FIG. 1 is a perspective view illustrating the wireless tag reading device 1 according to the embodiment. The wireless tag reading device 1 in FIG. 1 has a hollow shape of a substantially rectangular parallelepiped or a cube. The wireless tag reading device 1 includes a shield portion 11. The shield portion 11 includes a bottom surface portion 12, side surface portions 13, and a back surface portion 14.

The bottom surface portion 12 has a flat shape, and located at the bottom of the shield portion 11. The two side surface portions 13 (side surface portion 13A and side surface portion 13B) have a flat shape, and are erected upward at a substantially right angle from both right and left side portions of the bottom surface portion 12. The side surface portion 13 is integrally formed with the bottom surface portion 12. The back surface portion 14 is provided at the back of the wireless tag reading device 1. The back surface portion 14 has a flat shape, and is erected upward at a substantially right angle from the back of the bottom surface portion 12. The back surface portion 14 is formed by being fitted into a slit (not illustrated) provided on the back side of the side surface portion 13 from above. The back surface portion 14 has the same structure as the side surface portions 13, and is one type of the side surface portions 13.

The wireless tag reading device 1 as described above has hollow structure including an opening 24, an opening 25, and a housing portion 15. An upper portion of the opening 24 opens upward. The front portion of the opening 25 opens forward. The wireless tag reading device 1 internally includes the housing portion 15. A customer or a clerk places a product to be purchased by the customer or a basket K containing the product on the bottom surface portion 12, so that the product is located (housed) in the housing portion 15. The customer or the clerk holds a handle K1 provided above the basket K, and places the basket K on the bottom surface portion 12.

The housing portion 15 has a depth and a width enough to house the entire basket K. Therefore, a product housed up to an upper position of the basket K is sufficiently accommodated in the housing portion 15, and does not protrude upward from the housing portion 15. Furthermore, the product in such a state does not protrude upward from the wireless tag reading device 1.

Furthermore, a product is not necessarily required to be in the basket. The product may be directly placed in the housing portion 15.

Furthermore, the wireless tag reading device 1 has an arm 17 attached to a rear side portion of the side surface portion 13A. The arm 17 can freely extend, move, and rotate upward and in a horizontal direction. A display unit 18 is attached to an end of the arm 17. The display unit 18 includes, for example, a liquid crystal display, and displays information to a person who operates the wireless tag reading device 1. For example, the display unit 18 displays product information corresponding to tag information received from a wireless tag as a list of products to be purchased. An operation unit 19 is, for example, a touch panel provided on the display unit 18. The operation unit 19 operates a position corresponding to a key displayed by the display unit 18 to output information related to the key. The display unit 18 can adjust a display position and a display direction by extending, moving, and rotating the arm 17. An installation position of the display unit 18 is usually adjusted to a rear position (e.g., upper position of back surface portion 14) of the wireless tag reading device 1.

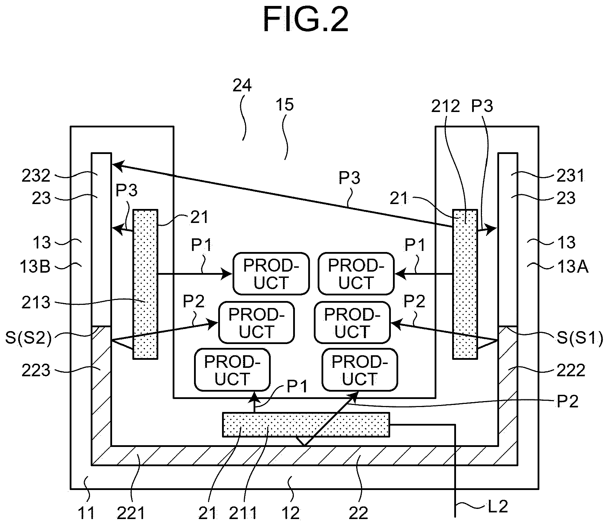

FIG. 2 is an explanatory cross-sectional view of the wireless tag reading device 1 taken along A-A position in FIG. 1. In FIG. 2, the wireless tag reading device 1 includes the bottom surface portion 12 and the side surface portions 13 at both ends of the bottom surface portion 12. The bottom surface portion 12 has a flat plate shape. The side surface portions 13 are erected upward from the ends. In FIG. 2, the side surface portion 13A is erected upward from a right end of the bottom surface portion 12. Furthermore, in FIG. 2, the side surface portion 13B is erected upward from a left end of the bottom surface portion 12.

The shield portion 11 of the wireless tag reading device 1 internally houses (embeds) a plurality of flat antennas 21. Specifically, a flat antenna 211 is housed in a substantially central portion of the bottom surface portion 12. Flat surfaces of the antenna 211 face the vertical direction. Furthermore, a flat antenna 212 is housed in a substantially central portion of the side surface portion 13A. Flat surfaces of the antenna 212 face the horizontal direction. Furthermore, a flat antenna 213 is housed in a substantially central portion of the side surface portion 13B. Flat surfaces of the antenna 212 face the horizontal direction. The antenna 211 radiates radio waves mainly in the vertical direction in FIG. 2. The antenna 212 radiates radio waves mainly in the horizontal direction in FIG. 2. An antenna 213 radiates radio waves mainly in the horizontal direction in FIG. 2. That is, the antenna 21 radiates radio waves from one surface toward the housing portion 15. Furthermore, the antenna 21 radiates radio waves from the other surface toward a portion other than the housing portion 15.

Furthermore, the shield portion 11 of the wireless tag reading device 1 internally houses (embeds) a radio wave reflecting unit 22. The radio wave reflecting unit 22 has a property of reflecting a radio wave radiated from the other surface of the antenna 21, and includes, for example, a metal plate of aluminum and the like. The radio wave reflecting unit 22 is disposed outside the antenna 21. Specifically, a flat-plate radio wave reflecting unit 221 is housed in the bottom surface portion 12. The radio wave reflecting unit 221 is disposed outside the antenna 211 (lower side in FIG. 2). Furthermore, a flat-plate radio wave reflecting unit 222 is housed in the side surface portion 13A. The radio wave reflecting unit 222 is disposed outside the antenna 212 (right side in FIG. 2). Furthermore, a flat-plate radio wave reflecting unit 223 is housed in the side surface portion 13B. The radio wave reflecting unit 223 is disposed outside the antenna 213 (left side in FIG. 2).

The radio wave reflecting unit 221, the radio wave reflecting unit 222, and the radio wave reflecting unit 223 are integrally formed. That is, the radio wave reflecting unit 22 includes the radio wave reflecting unit 221, the radio wave reflecting unit 222, and the radio wave reflecting unit 223.

The radio wave reflecting unit 222 is formed at a substantially right angle to the radio wave reflecting unit 221. Furthermore, the radio wave reflecting unit 223 is formed at a substantially right angle to the radio wave reflecting unit 221. Furthermore, the radio wave reflecting unit 222 and the radio wave reflecting unit 223 are substantially parallel to each other. That is, the radio wave reflecting unit 22 is formed in a substantially U shape with the upper side opened when the wireless tag reading device 1 in FIG. 2 is viewed from the front side.

Furthermore, an upper end S of the radio wave reflecting unit 22 extends to a position where the upper end S overlaps the antenna 212 or the antenna 213 in the vertical direction. Specifically, an upper end S1 of the radio wave reflecting unit 222 extends to a position where the upper end S1 overlaps the antenna 212 in the vertical direction. Furthermore, an upper end S2 of the radio wave reflecting unit 223 extends to a position where the upper end S2 overlaps the antenna 213 in the vertical direction.

Furthermore, in the upper end S1, flat radio wave absorbing units 23 are stacked on the upper end S of the radio wave reflecting unit 22. Specifically, a flat radio wave absorbing unit 231 is stacked on the upper end S1 of the radio wave reflecting unit 222. Here, the radio wave reflecting unit 222 and the radio wave absorbing unit 231 have substantially the same length in the vertical direction. Furthermore, a flat radio wave absorbing unit 232 is stacked on the upper end S2 of the radio wave reflecting unit 223. Here, the radio wave reflecting unit 223 and the radio wave absorbing unit 232 have substantially the same length in the vertical direction. The radio wave absorbing unit 23 has a property of absorbing a radio wave radiated from the antenna 21, and includes, for example, a flat plate of ferrite and the like. The wireless tag reading device 1 absorbs the radio wave radiated from the antenna 21 to prevent the radio wave from leaking from the wireless tag reading device 1 to the outside.

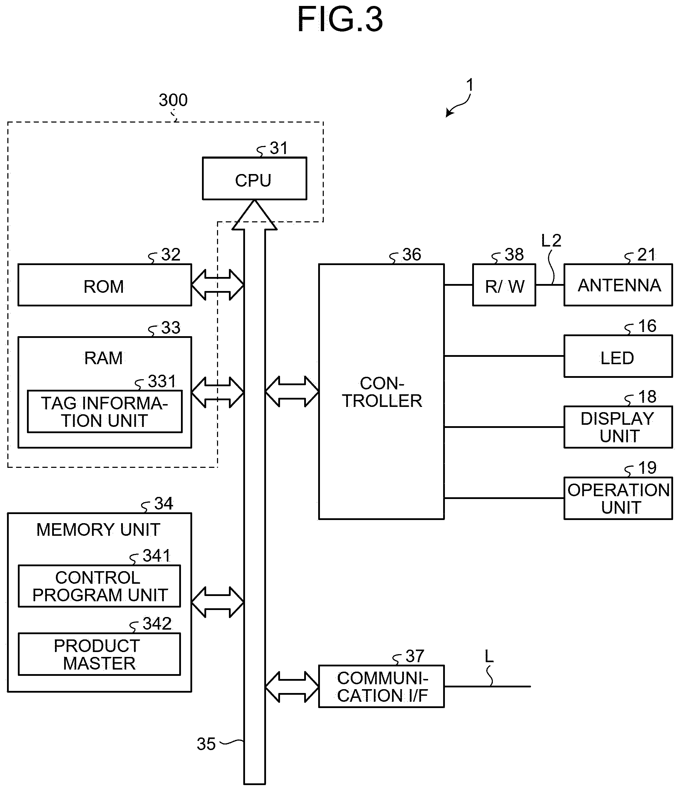

Note that a coaxial cable L2 for electrical connection with a control unit 300 (see FIG. 3) is connected to the antenna 21 (antenna 211, antenna 212, and antenna 213) in order to receive a signal from the wireless tag reading device 1 for emitting a radio wave and transmit information received from a wireless tag to the control unit 300 of the wireless tag reading device 1. Then, the radio wave reflecting unit 22 is provided with a hole (not illustrated) through which the coaxial cable L2 is connected to the antenna 21.

Furthermore, the above-described back surface portion 14 houses the radio wave reflecting unit 22 and the radio wave absorbing unit 23, and performs a function equivalent to that of the side surface portion 13.

Furthermore, a belt-shaped light emitting diode (LED) 16 is provided upward at an upper end of the side surface portion 13 (side surface portion 13A and side surface portion 13B). While the wireless tag reading device 1 is reading a wireless tag, or at the time when the wireless tag reading device 1 ends the reading, the LED 16 displays the information in different display methods (lighting, blinking, and color) to communicate various pieces of information to an operator.

In the wireless tag reading device 1 having such configuration, a radio wave P1 radiated from the antenna 211 toward the housing portion 15 reaches the wireless tag attached to the product. The wireless tag sends tag information by a response wave in response to the received radio wave P1. The antenna 21 receives the tag information from the wireless tag. Furthermore, a radio wave P2 radiated from the antenna 211 toward the side of the radio wave reflecting unit 221 is reflected by the radio wave reflecting unit 221, and reaches the wireless tag attached to the product. The wireless tag sends tag information in response to the received radio wave P2. The antenna 21 receives the tag information from the wireless tag.

Furthermore, the radio wave P1 radiated from the antenna 212 toward the side of the housing portion 15 reaches the wireless tag attached to the product. The wireless tag sends tag information in response to the received radio wave P1. The antenna 21 receives the tag information from the wireless tag. Furthermore, the radio wave P2 radiated from the antenna 212 toward the side of the radio wave reflecting unit 222 is reflected by the radio wave reflecting unit 222, and reaches the wireless tag attached to the product. The wireless tag sends tag information in response to the received radio wave P2. The antenna 21 receives the tag information from the wireless tag. Furthermore, a radio wave P3 radiated from the antenna 212 toward the side of the radio wave absorbing unit 231 is absorbed by the radio wave absorbing unit 231.

Furthermore, the radio wave P1 radiated from the antenna 213 toward the side of the housing portion 15 reaches the wireless tag attached to the product. The wireless tag sends tag information in response to the received radio wave P1. The antenna 21 receives the tag information from the wireless tag. Furthermore, the radio wave P2 radiated from the antenna 213 toward the side of the radio wave reflecting unit 223 is reflected by the radio wave reflecting unit 223, and reaches the wireless tag attached to the product. The wireless tag sends tag information in response to the received radio wave P2. The antenna 21 receives the tag information from the wireless tag. Furthermore, the radio wave P3 radiated from the antenna 213 toward the side of the radio wave absorbing unit 232 is absorbed by the radio wave absorbing unit 232.

By the way, the radio wave P1 and the radio wave P2 have a different phase. Mutual interference of the radio wave P1 and the radio wave P2 may cause a null point at which mutual radio wave intensities are canceled. A wireless tag located at the null point may fail to receive a radio wave radiated by the antenna 21. Then, as the radio wave reflecting unit 222 and the radio wave reflecting unit 223 are increased in length in the vertical direction, a larger number of null points tend to occur. In the embodiment, however, the radio wave reflecting unit 222 and the radio wave reflecting unit 223 are decreased in length in the vertical direction, and the radio wave absorbing unit 231 and the radio wave absorbing unit 232 are stacked thereon. Therefore, the radio wave reflecting unit 22 is not provided at the position where the radio wave absorbing unit 231 and the radio wave absorbing unit 232 are stacked, which can reduce the number of points where a null point occurs. As a result, the accuracy of reading a wireless tag in the housing portion 15 can be improved. In addition, the stacked radio wave absorbing unit 231 and the radio wave absorbing unit 232 can prevent leakage of a radio wave radiated by the antenna 21 to the outside. Furthermore, the radio wave reflecting unit 222 and the radio wave reflecting unit 223 are formed of metal, and have a short length in the vertical direction, which can contribute to weight reduction of the wireless tag reading device 1.

A hardware configuration of the wireless tag reading device 1 will now be described. FIG. 3 is a block diagram illustrating a hardware configuration of the wireless tag reading device 1. As illustrated in FIG. 3, the wireless tag reading device 1 includes a central processing unit (CPU) 31, a read only memory (ROM) 32, a random access memory (RAM) 33, a memory unit 34, and the like. The CPU 31 is a control main body. The ROM 32 stores various programs. The RAM 33 develops programs and various pieces of data. The memory unit 34 stores various programs. The CPU 31, the ROM 32, the RAM 33, and the memory unit 34 are connected to each other via a bus 35. The CPU 31, the ROM 32, and the RAM 33 constitute the control unit 300. That is, the control unit 300 executes control processing of the wireless tag reading device 1 to be described later by the CPU 31 operating in accordance with a control program which is stored in the ROM 32 or the memory unit 34 and developed in the RAM 33.

The RAM 33 includes a tag information unit 331. The tag information unit 331 stores product information (e.g., product code, product name, and product price) on a product to be purchased by a customer. The product information is acquired based on the tag information read by the wireless tag reading device 1.

The memory unit 34 includes a solid state drive (SSD), a hard disc drive (HDD), a flash memory, and the like. The memory unit 34 maintains stored contents even when the power is shut down. The memory unit 34 includes a control program unit 341 and a product master 342. The control program unit 341 stores a control program for controlling the wireless tag reading device 1. The product master 342 stores the product information on a product in association with an individual product number for identifying the individual product or a product code of the product including the individual product number.

The control unit 300 is connected to a reader/writer (R/W) 38, an LED 16, the display unit 18, and the operation unit 19 via the bus 35 and a controller 36. The display unit 18 is, for example, a liquid crystal display. The operation unit 19 is, for example, a touch panel. The antenna 21 (antenna 211, antenna 212, and antenna 213) is connected to the R/W 38 via a communication line L2. The R/W 38 generates a radio wave to be radiated from the antenna 21 and transmits the radio wave to the antenna 21 based on information for reading a wireless tag created by the control unit 300. Furthermore, the R/W 38 converts tag information in a radio wave format received by the antenna 21 into tag information that can be analyzed by the control unit 300.

Furthermore, the control unit 300 is connected to a communication I/F 37 via the bus 35. The communication I/F 37 is electrically connected to the self-POS terminal via a connection line L, and can mutually transmit and receive information.

When detecting that the basket K has been housed in the housing portion 15, the control unit 300 of the wireless tag reading device 1 radiates a radio wave from the antenna 21, and receives tag information including information for identifying a product as an individual product from a wireless tag attached to a product housed in the basket K placed in the housing portion 15. Then, the control unit 300 searches the product master 342 based on the tag information, acquires product information on the corresponding product, and stores the product information in the tag information unit 331. Furthermore, the control unit 300 displays the acquired product information on the display unit 18. Then, when the reading of the wireless tag ends, the control unit 300 lights or blinks the LED 16 to notify an operator of the reading status (e.g., whether reading is in progress or has ended).

As described above, the wireless tag reading device 1 in the embodiment for reading tag information of a wireless tag attached to a product housed in the housing portion 15 includes: the bottom surface portion 12; and the plurality of side surface portions 13 erected upward from an end of the bottom surface portion 12, the housing portion 15 being surrounded by the bottom surface portion 12 and the side surface portions 13, in which the wireless tag reading device 1 includes: inside the side surface portions 13, the antenna 21 that radiates a radio wave to the wireless tag; the radio wave reflecting unit 22 that is provided outside the antenna 21 and that reflects the radio wave radiated from the antenna 21 toward the housing portion 15; and the radio wave absorbing unit 23 that is stacked and provided at the upper portion S of the radio wave reflecting unit 22 and that absorbs the radio wave radiated from the antenna 21.

In the wireless tag reading device 1 of the embodiment as described above, the radio wave reflecting unit 22 has a short length in the vertical direction, and the radio wave absorbing unit 23 is stacked thereon. Therefore, the radio wave reflecting unit 22 is not provided at the position where the radio wave absorbing unit 23 is stacked, and a radio wave is not reflected at the position, which can reduce the number of points where a null point occurs in the housing portion 15. As a result, the accuracy of reading a wireless tag in the housing portion 15 can be improved. In addition, the stacked radio wave absorbing unit 23 can prevent leakage of a radio wave radiated by the antenna 21 from the wireless tag reading device 1 to the outside.

Although the embodiment of the present invention has been described above, the embodiment is presented as an example, and is not intended to limit the scope of the invention. The embodiment can be implemented in various other forms, and various omissions, substitutions, and changes can be made without departing from the gist of the invention. The embodiment and variations thereof are included in the scope and gist of the invention, and are included in the invention described in claims and the equivalent scope thereof.

For example, in the embodiment, the detachable back surface portion 14 is provided. The back surface portion 14, however, may be fixedly provided in the wireless tag reading device 1. Conversely, the wireless tag reading device 1 is not required to include the back surface portion 14. Furthermore, the side surface portion 13 having a configuration similar to that of the back surface portion 14 may be provided on the front opposite to the back surface portion 14. In this case, the side surface portion 13 provided on the front may be detachable from or fixed to the wireless tag reading device 1.

Furthermore, in the embodiment, a product has been described as one example of an article. This is, however, not a limitation, and the article may be other than a product.

### CITATION LIST

### Patent Literature

Patent Literature 1: JP 2018-190255 A

## Claims

1. A wireless tag reading device for reading tag information of a wireless tag attached to an article housed in a housing portion, comprising: a bottom surface portion; and a plurality of side surface portions erected upward from an end of the bottom surface portion, the housing portion being surrounded by the bottom surface portion and the side surface portions,
wherein the wireless tag reading device includes: inside the side surface portions,
an antenna that radiates a radio wave to the wireless tag;
a radio wave reflecting unit that is provided outside the antenna and that reflects the radio wave radiated from the antenna toward the housing portion; and
a radio wave absorbing unit that is provided at an upper portion of the radio wave reflecting unit and that absorbs the radio wave radiated from the antenna.

2. The wireless tag reading device according to claim 1,
wherein the bottom surface portion is also provided with the antenna and the radio wave reflecting unit below the antenna.

3. The wireless tag reading device according to claim 1 or 2,
wherein an opening is provided on an upper surface of the wireless tag reading device.

4. The wireless tag reading device according to claim 1 or 2,
wherein an opening is provided on an upper surface and a front surface of the wireless tag reading device.

5. The wireless tag reading device according to any one of claims 1 to 4,
wherein the side surface portions provided on a back surface of the wireless tag reading device are detachable.
